# EUROPÄISCHE PATENTANMELDUNG

(11) **EP 2 116 793 A2**
(43) Veröffentlichungstag der Anmeldung: **11.11.2009**
(21) Anmeldenummer: 09159039.8
(22) Anmeldetag: 29.04.2009
(51) Int. Cl.: F24J 2/26

(54) **Absorber, insbesondere für einen Sonnenkollektor und Verfahren zur Herstellung eines Absorbers für einen Sonnenkollektor**

(30) Priorität: 06.05.2008 DE 102008022391
(71) Anmelder: SCHÜCO International KG, 33609 Bielefeld (DE)
(72) Erfinder: Bitter, Dieter, 57413 Finnentrop (DE); Rosenwirth, Andreas, 32130 Enger (DE); Hanke, Carsten, 33613 Bielefeld (DE); Höcker, Eitel-Friedrich, 33739 Bielefeld (DE)
(74) Vertreter: Dantz, Jan Henning

(57) **Zusammenfassung**

Ein Absorber (1), der ein zumindest abschnittsweise ebenes bzw. eine ebene Fläche (8b) aufweisendes Absorberblech (2) aufweist, an dem mit wenigstens einem Wärmeleitblech (4) wenigstens ein von einem Wärmeträgermedium zur Wärmemitnahme durchströmbares, vorzugsweise metallisches Rohr (3) angeordnet ist, welches eine jedenfalls abschnittsweise ebene Fläche (8a) aufweist, die an der ebenen Fläche (8b) des Absorberblechs anliegt.

Das Verfahren zu Herstellung eines derartigen Absorbers zeichnet sich dadurch aus, dass das wenigstens eine Rohr (3) und das oder die Wärmeleitbleche aufeinander bzw. zusammengelegt werden und dass dann an dieser Anordnung aus dem wenigstens einen Rohr und dem wenigstens einen Wärmeleitblech (4) die abschnittsweise ebene Fläche (8a) des metallischen Rohres in einem umformenden, nicht spanabhebenden Arbeitsgang geformt wird.

## Beschreibung

Die Erfindung betrifft einen Absorber, insbesondere für einen Sonnenkollektor, nach dem Oberbegriff des Anspruchs 1 und ein Verfahren zur Herstellung eines Absorbers für einen Sonnenkollektor.

Sonnenkollektoren weisen ein Gehäuse mit einer oberen Abdeckung, vorzugsweise einer Glasscheibe, und mit einer unteren Abdeckung, vorzugsweise aus einem Blech auf und einen in dem Gehäuse angeordneten Absorber, der dazu ausgelegt ist, Sonnenlicht bzw. - energie in Wärme umzuwandeln, wobei der Absorber ein Absorberblech aufweist sowie Rohre als Leitungen für ein Wärmeträgermedium zum Energietransport durch Wärmemitnahme.

Ein derartiger Sonnenkollektor wird in der DE 20 2006 003 399 beschrieben, die einen sogenannten Hybridkollektor mit speziell ausgestalteten Wärmeleitblechen offenbart.

Nach dem Stand der Technik sind zudem verschiedenste Absorber für Sonnenkollektoren bekannt. Diese bekannten Absorber weisen in der Regel Absorberbleche auf, die zur Sonnenseite hin beschichtet sind und unter denen Rohre zur Durchleitung eines Fluids - d.h. eines Gases oder einer Flüssigkeit - angeordnet sind. Die Rohre, die in der Regel aus einem gut wärmeleitenden Metall, insbesondere Kupfer, bestehen, werden vorzugsweise als Mäander (ein Rohr) oder als sogenannte Harfe (mehrere verbundene Rohre) ausgebildet.

Zur Verbindung der Kupferrohre mit den Absorberblechen sind aus dem Stand der Technik verschiedene Verfahren bekannt.

So wurde versucht, Schweiß- und Lötverbindungen einzusetzen, die aber - um eine gute Verbindung zu realisieren - ein gleiches Material voraussetzen und Spuren an der der Sonne zugewandten, sichtbaren Oberfläche der Absorberbleche hinterlassen. An derartigen Verbindungen ist ferner nachteilig, dass sie sich durch thermische ganz oder abschnittsweise Spannungen lösen können. Dieses kann insbesondere dann vorkommen, wenn unterschiedliche Materialien verwendet werden, die verschieden große Ausdehnungskoeffizienten aufweisen.

In der gattungsgemäßen DE 20 2006 003 399 wird vorgeschlagen, die Rohre mit Hilfe von sogenannten Wärmeleitblechen unter dem Absorberblech zu halten. Diese Lösung hat sich zwar an sich bewährt, erfordert aber den Einsatz zusätzlichen Materials und ist auch in Hinsicht auf den Wärmeübergang vom Absorberblech zum Rohr noch weiter optimierbar.

Im Stand der Technik werden auch Klebeverbindungen zwischen den Blechen zum Halten der Rohre beschrieben. Klebeverbindungen haben aber in der Regel den Nachteil, dass sie einen relativ schlechten Wärmeleitwert aufweisen, da der Klebstoff in der Regel isolierend wirkt. Darüber hinaus ist das Problem bekannt, dass durch unterschiedliche Wärmeausdehnungen der Bleche, bzw. der darin eingebetteten Rohre, die Klebungen zerstört werden können.

Die aus dem Stand der Technik bekannten Klebeverbindungen haben auch den Nachteil, dass auch die Rohre mit den Blechen verklebt werden, wodurch es zu weiteren Wärmespannungen kommen kann.

Insgesamt ist bei dem beschriebenen Stand der Technik nach wie vor der Wärmeübergang vom Absorberblech über die Rohre zum Wärmeträgermedium zu verbessern. Darüber soll eine einwandfreie Optik der Absorberaußenseite gegeben sein.

Die Lösung der beiden letztgenannten Probleme ist die Aufgabe der Erfindung.

Die Erfindung löst diese Aufgabe durch den Sonnenkollektor nach Anspruch 1 und durch das Verfahren nach Anspruch 12.

Anspruch 1 schafft einen Absorber, der ein zumindest abschnittsweise ebenes Absorberblech aufweist, an dem mit wenigstens einem Wärmeleitblech wenigstens ein von einem Wärmeträgermedium zur Wärmemitnahme durchströmbares metallisches Rohr angeordnet ist, welches eine jedenfalls abschnittsweise ebene Fläche aufweist, die an der ebenen Fläche des Absorberblechs anliegt.

Durch die ebene, insbesondere direkte Anlage des Absorberbleches an dem oder den Rohren wird auf einfache Weise ein hervorragender Wärmeübergang zwischen diesen beiden Elementen des Absorbers erreicht, wobei die Optik des Absorbers bei dieser Konstruktion nicht beeinträchtigt wird.

Vorzugsweise liegen die ebenen Flächen des wenigstens einen Rohres und des Absorberbleches parallel zueinander.

Die Erfindung schafft auch ein Verfahren zur Herstellung eines Absorbers nach einem der sich auf diesen beziehenden Ansprüche, bei dem das Rohr und die Wärmeleitbleche zusammengelegt werden und bei dem sodann an dieser Anordnung aus dem wenigstens einen Rohr und dem wenigstens einen Wärmeleitblech die abschnittsweise ebene Fläche des metallischen Rohres in einem umformenden, nicht spanabhebenden Arbeitsgang geformt wird.

Dieses Verfahren sichert besonders einfach und unkompliziert, dass sich das Wärmeleitblech formschlüssig an das Rohr legt, während das Rohr zumindest abschnittsweise oder über seine gesamte axiale Länge hinweg umformend abgeflacht wird.

Vorzugsweise befindet sich das Rohr bei dem umformenden Arbeitsgang ferner in direkter Anlage zum Absorberblech, so dass in einfacher Weise auch eine genaue Anlage dieser beiden Elemente aneinander in einem Arbeitsgang gesichert wird.

Durch voll umfängliches umschließen, können Rohre mit besonders dünnen Wandstärken, zwischen 0,2 und 0,5 mm vorzugsweise 0,3 mm, verwendet werden.

Durch den besonders guten Wärmeübergang kann die Länge der Rohre reduziert werden, bei gleicher Effektivität (was eine Material- und Kostenverringerung ermöglicht).

Es ist möglich, dass die Rohre 3 zwischen Wärmeleit- und Absorberblech in Längsrichtung verschieblich gehalten werden, um Wärmespannungen auszugleichen.

Durch die Erfindung wird derart ein Verfahren geschaffen, mit dem sich ein Absorber für einen derartigen Sonnenkollektor besonders einfach und kostengünstig herstellen lässt.

Die Erfindung schafft insofern ein Verfahren, bei dem ein Wärmeleitblech so mit einem Absorberblech verbunden wird, dass das dazwischen angeordnete runde Rohr die ebene Fläche parallel zum Absorberblech erhält und vollumfänglich mit den Blechen in direktem Kontakt steht. Hierdurch wird die Herstellung des Absorbers besonders einfach und dennoch der bereits erwähnte sehr gute Wärmeübergang erzielt.

Das Wärmeleitblech wird dabei vorzugsweise unter das Absorberblech geklebt, Um den Wärmeübergang der Klebeschicht zu verbessern, werden weitere vorteilhafte Ergänzungen vorgeschlagen.

So kann der Wärmeübergang der Klebeverbindung verbessert werden, indem dem Klebstoff gut wärmeleitende Stoffe, insbesondere Metallsplitter oder -fasern beigemengt werden.

Es ist auch denkbar, den Wärmeübergang dadurch zu verbessern, dass abschnittsweise Metallstreifen oder eine Wärmeleitpaste zwischen Wärmeleitblech und Absorberblech angeordnet ist.

Ebenso kann die Wärmeleitfläche, die mit dem Absorberblech in Berührung kommt, unterschiedliches Niveau aufweisen, wobei das Wärmeleitblech Abschnitte direkten Kontaktes aufweist, die mit Klebstoffabschnitten wechseln.

Vorteilhaft wird ein Kunststoff-Klebstoff verwendet, der beidseitig klebend aufrollbar ist und in dem Verfahren auf einzelne Streifen der Wärmeleitbleche auftragbar bzw. aufrollbar ist.

Erfindungsgemäß wird vorzugsweise zwischen Rohr- und Absorberblech bzw. zwischen Wärmeleitblech und Rohr kein Klebstoff angeordnet.

Dieses hat den Vorteil, dass sich das Rohr bei thermischer Längenänderung frei zwischen den Blechen verschieben kann. Hierdurch werden Spannungen und Beschädigungen vermieden.

In einer bevorzugten Ausgestaltung werden die Wärmeleitbleche zu den Enden hin konisch ausgeführt. Hierdurch wird der Wärmefluss verbessert.

Aus Kostengründen wird für das Absorberblech und dem Wärmeleitblech ein Aluminiumwerkstoff gewählt im Gegensatz zu den handelsüblichen Kupferrohren.

Besonders bevorzugt ist das nicht spanabhebende Umformverfahren ein Pressverfahren, wobei zumindest das wenigstens eine Rohr, das wenigstens eine Wärmeleitblech und vorzugsweise auch das Absorberblech gemeinsam in ein Presswerkzeug eingelegt sind.

Es ist alternativ auch einfach und unkompliziert, wenn das das nicht spanabhebende Umformverfahren ein Drückrollverfahren ist.

Nach einer bevorzugten Variante des erfindungsgemäßen Verfahrens wird
a: in dem wenigstens einen Wärmeleitblech zunächst wenigstens eine Rinne ausgebildet,
b: in diese Rinne sodann das Rohr eingelegt wird und
c: die Anordnung aus Schritt b) mit dem Absorberblech abgedeckt wird und
d: die Anordnung aus Schritt c) sodann dem Umformverfahren aus Anspruch 22 unterzogen.

Die Herstellung nach diesem Verfahren sichert insbesondere, dass die Optik durch die Herstellung nicht beeinträchtigt wird.

Es ist dabei vorteilhaft, wenn die Rinne einen größeren Durchmesser aufweist als das in sie eingelegte Rohr.

Da die Kupferrohre insgesamt annähernd vollflächig umschlossen werden, können diese mit geringeren Wandstärken ausgeführt werden, da das Absorber- und das oder die Wärmeleitbleche ebenfalls zur Druckaufnahme herangezogen werden. Dadurch können Materialkosten eingespart werden.

Durch den optimalen Wärmeübergang kann die relative Rohrlänge minimiert werden, wodurch sich wieder Materialeinsparungen ergeben.

Vorzugsweise weist das wenigstens eine Rohr die Querschnittsform eines in einem Teilbereich seines Umfangs abgeflachten Kreises auf, wobei der abgeflachte Bereich die ebene Fläche ausbildet, welche an dem Absorberblech anliegt und wobei die Wärmeleitbleche formschlüssig den einer Kreisform folgenden übrigen Außenumfang des wenigstens einen Rohres einfassen.

Alternativ kann das wenigstens eine Rohr die Querschnittsform eines in einem Teilbereich seines Umfangs abgeflachten Ovals aufweisen, wobei der abgeflachte Bereich die ebene Fläche ausbildet, welche an dem Absorberblech anliegt und wobei die Wärmeleitbleche formschlüssig den einer Ovalform folgenden übrigen Außenumfang des wenigstens einen Rohres einfassen.

Es ist vorteilhaft, wenn zunächst streifenförmige Blechstücke zur Ausbildung der Wärmeleitbleche z.B. aus einem Blechband abgelängt werden und wenn dann in diese Blechstücke eine bzw. die Rinne eingeprägt wird, deren Durchmesser größer ist als der Durchmesser des Ausgangsrohres.

Nach einer weiteren besonders bevorzugten Variante des Verfahrens werden
a: die abgelängten und vorzugsweise bereits mit der Rinne versehenen Wärmeleitbleche mit dem erfindungsgemäße Klebstoff eingerollt bzw. bestrichen,
b: die Wärmeleitbleche in eine Werkzeugform einer Presse eingelegt,
c: sodann das gebogene Kupferrohr (Mäander) bzw. die Kupferrohre (Harfe) in die Kanäle der Wärmeleitbleche eingelegt,
d: sodann das Absorberblech auf die Rohre aufgelegt, und
e: im Folgenden mit einem planebenen Stempel das Absorberblech auf die Rohre gepresst, so dass dieses sich in den Kanälen der Wärmeleitbleche bei der Umformung ausdehnt.

Vorzugsweise werden- um einen besonders guten Wärmeübergang zu sichern - die Kanäle der Wärmeleitbleche und die Rohrdurchmesser dergestalt aufeinander abgestimmt, dass die Rohre den letztlich verbleibenden Zwischenraum zwischen Absorberblech und Wärmeleitblech annähernd voll umfänglich ausfüllen und das Absorberblech und das Wärmeleitblech miteinander verpresst werden.

Besonders bevorzugt werden mehrere der Rohre und/oder mehrere der Wärmeleitbleche und das Absorberblech nach einem oder mehreren der Schritte der vorstehenden Verfahrenansprüche miteinander verbunden.

Das erfindungsgemäße Verfahren sichert auch sehr kurze Herstellzeiten, denn vorzugsweise wird nur ein Pressvorgang durchgeführt. Es kann aber auch mehrfach gepresst werden.

Vorzugsweise sind die Kanäle der Wärmeleitbleche und die Rohrdurchmesser dergestalt aufeinander abgestimmt, dass die Rohre den letztlich verbleibenden Zwischenraum zwischen dem Absorberblech und dem Wärmeleitblech annähernd voll umfänglich ausfüllen und das Absorberblech und das Wärmeleitblech gut miteinander verpresst werden.

Die gebogenen Rohrenden bzw. die Enden für weitere Anschlüsse werden vorzugsweise nicht geprägt bzw. abgeflacht, so dass hier eine Wärmeausdehnung und die Montage von Anschlussrohren erfolgen können.

Ebenfalls vorteilhaft ist dabei, dass zunächst aus runden Ausgangsrohren einfach Mäander oder Harfen hergestellt werden können. Dieses wäre mit Rohren, die abgeflachte Bereiche aufweisen, kaum möglich.

Wenn in den Ansprüchen oder der Beschreibung von wenigstens einem Rohr, Absorberblech oder Wärmeleitblech gesprochen wird, bedeutet dies, dass auch mehrere dieser Elemente nach der jeweils beschrieben Art ausgebildet und angeordnet sein können.

Vorzugsweise werden insofern mehrere der Rohre und/oder mehrere der Wärmeleitbleche und das Absorberblech nach einem oder mehreren der Merkmale der Vorrichtungsansprüche miteinander verbunden und/oder werden es mehrere der Rohre und/oder mehrere der Wärmeleitbleche und das Absorberblech nach einem oder mehreren der Schritte der vorstehenden Verfahrenansprüche miteinander verbunden.

Nachfolgend wird die Erfindung anhand von Ausführungsbeispielen unter Bezug auf die Zeichnung näher erläutert. Es zeigt:
- Fig. 1: einen Absorber für einen Kollektor von der sonnenabgewandten Seite;
- Fig. 2: einen Schnitt durch einen Abschnitt eines bekannten Absorbers;
- Fig. 3: einen Schnitt durch einen Abschnitt eines erfindungsgemäßen Absorbers;
- Fig. 4 -6: Schnitte durch Abschnitte weiterer erfindungsgemäßer Absorber;
- Fig. 7: einen Schnitt- bzw. Seitenansicht einer nach einem erfindungsgemäßen Verfahren zu verbindenden Anordnung aus einem Absorberblech, einem Rohr und einem Wärmeleitblech;
- Fig. 8a,b; 9a,b: weitere Ansichten von Abschnitten erfindungsgemäßer Absorber.

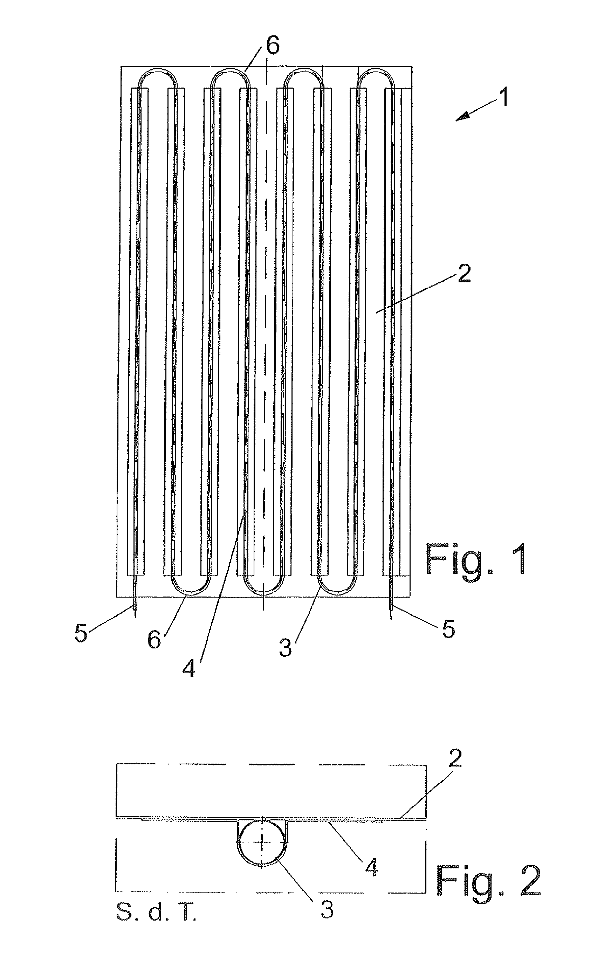

Figur 1 zeigt einen Absorber für einen Kollektor von der sonnenabgewandten Seite, also von unten.

Der Absorber 1 weist ein Absorberblech 2 auf, das vorzugsweise aus Aluminium besteht und mit einer zur Sonnenseite hin beschichteten Oberfläche zur besseren Absorption der Sonnenstrahlen versehen sein kann (hier nicht dargestellt).

In Hinsicht auf die Richtung der Sonnenlichteinstrahlung unter der ebenen Fläche des Absorberblechs 2 ist wenigstens ein Rohr 3 angeordnet, welches dazu ausgelegt ist, für einen Energietransport durch Wärmemitnahme von einem Wärmeträgermedium, insbesondere einem Fluid, wie einem Gas oder einer Flüssigkeit, durchströmt zu werden.

Nach dem Ausführungsbeispiel der Fig. 1 ist das Rohr 3 für das Wärmeträgermedium mäanderförmig ausgebildet. Diese Anordnung ist rein beispielhaft zu verstehen. So könnten auch mehrere Rohre z.B. in Harfenform unter dem Absorberblech angeordnet sein (hier nicht dargestellt).

Als das Ausgangswerkstück zur Herstellung der Absorber werden vorzugsweise handelsübliche, im Querschnitt runde Metall-, insbesondere Kupferrohre, verwendet, die relativ leicht gebogen werden können und an deren Rohrenden 5 leicht handelsübliche Verbindungselemente angeschlossen werden können.

Das Rohr 3 wird mit mindestens einem Wärmeleitblech, vorzugsweise mit einer Vielzahl von geraden, profilähnlichen Wärmeleitblechen 4, unter dem Absorberblech 2 gehalten.

Nach einer besonders bevorzugten Ausgestaltung sind die Wärmeleitbleche 4 jeweils streifenförmig ausgelegt, wobei jedem geraden Abschnitt des Mäanders in Längsrichtung vorzugsweise ein streifenförmiges Wärmeleitblech zugeordnet ist und wobei die jeweils um 180° gebogenen Rohrenden 6 nicht von den Wärmeleitblechen 4 abgedeckt sind.

Diese Anordnung hat den Vorteil, dass sich bei thermischer Ausdehnung keine Spannungen aufbauen: die Rohre 3 werden derart kraftschlüssig zwischen Absorberblech 2 und Wärmeleitblech 4 gehalten, dass sie eine axiale Verschiebung zulassen. Die Wärmeleitbleche 4 sind daher in ihrer länglichen Ausrichtung immer kürzer als das Absorberblech 2.

Figur 2 zeigt einen Teilschnitt durch einen Absorber nach dem Stand der Technik mit einem ebenen Absorberblech 2, unter dem ein Rohr 3 für ein Wärmeträgermedium angeordnet ist, welches durch ein Wärmeleitblech 4 gehalten wird.

Nachteilig hierbei ist, dass das Rohr 3 das wärmeaufnehmende Absorberblech 2 quasi nur punktuell bzw. auf einer Linie berührt. Es findet also ein sehr schlechter Wärmeübergang statt.

Das Wärmleitblech 4 umschließt das Rohr 3 ca. um 180°, d.h. dass nur ungefähr 50% des Rohres 3 im direkten Kontakt mit den Blechen steht.

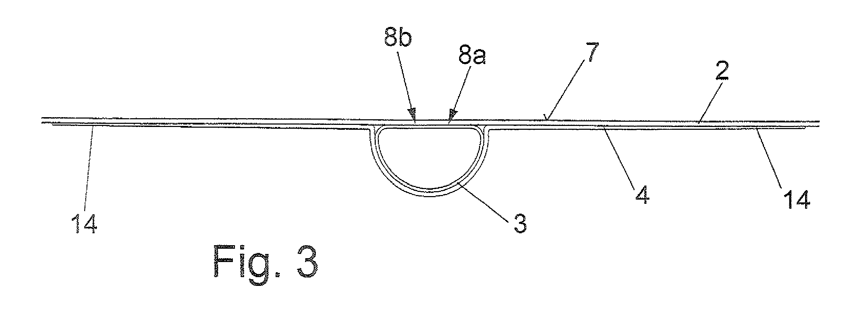

Figur 3 zeigt wie Figur 2 einen Teilschnitt, diesmal der erfindungsgemäßen Ausführung eines Absorbers.

Das Absorberblech 2 weist eine völlig ebene, optisch ansprechende bzw. hinsichtlich seiner Optik nicht von Unebenheiten beeinträchtigte, zur Sonne gewandte Außenfläche 7auf

Unter dem Absorberblech 2 ist ein bei dem Zusammenbau des Absorbers in einem nicht spanenden Umformverfahren umgeformtes Rohr 3 (verformter Rohrabschnitt genannt) angeordnet, das zum Absorberblech 2 hin durchgehend über seine axiale Länge hinweg oder zumindest abschnittsweise eine ebene Fläche 8a aufweist, die direkt an einer korrespondierenden ebenen Fläche 8b des Absorberblechs 2 anliegt.

Diese ebene Fläche 8a des Rohres 3 (die vorzugsweise größer ist als 1/3 des Rohrumfangs) steht im direkten Kontakt mit dem Absorberblech 2, wodurch sich ein optimierter, direkter Wärmeübergang ergibt.

Das Wärmeleitblech 4 ist mit dem Absorberblech verklebt und umschließt den ungefähr halbrunden Umfang des Rohres 3. Hierdurch wird ebenfalls Wärme vom Absorberblech 2 über das Rohr 3 an das Wärmeträgermedium z.B. Wasser abgegeben.

Deutlich zu erkennen ist, dass das Rohr 3 nahezu am gesamten Umfang in Kontakt mit dem Absorberblech 2 und dem Wärmeleitblech 4 steht. Zwischen dem Rohr und den Blechen ist kein Klebstoff vorhanden.

Durch dass voll umfängliche Umschließen des Rohres 3 kann ein relativ zur Wandstärke des Rohres höherer Druck in dem Rohr 3 herrschen. Hierdurch ist es möglich die Rohrwandstärke sehr gering auszuführen, vorzugsweise 0,3 mm, wodurch die Verformung erleichtert wird und sich eine Materialersparnis ergibt.

Für das Absorberblech 2 und das Wärmeleitblech 4 wird vorzugsweise ein Aluminiumblech in einer Stärke von 0,5 mm verwendet, wobei für das Wärmeleitblech eine gesonderte Ausbildung gewählt werden kann, wie weiter unten näher beschrieben.

Die bevorzugte Klebeverbindung zwischen dem Absorberblech 2 und dem Wärmeleitblech 4 wird besonders dünn ausgeführt, um einen möglichst guten Wärmeübergang trotz der Isolierwirkung des Klebstoffs zu erhalten. Zur weiteren Verbesserung des Wärmeübergangs wird vorgeschlagen, Metallsplitter oder Metallfasern einem an sich bekannten, handelsüblichen Klebstoff beizumengen.

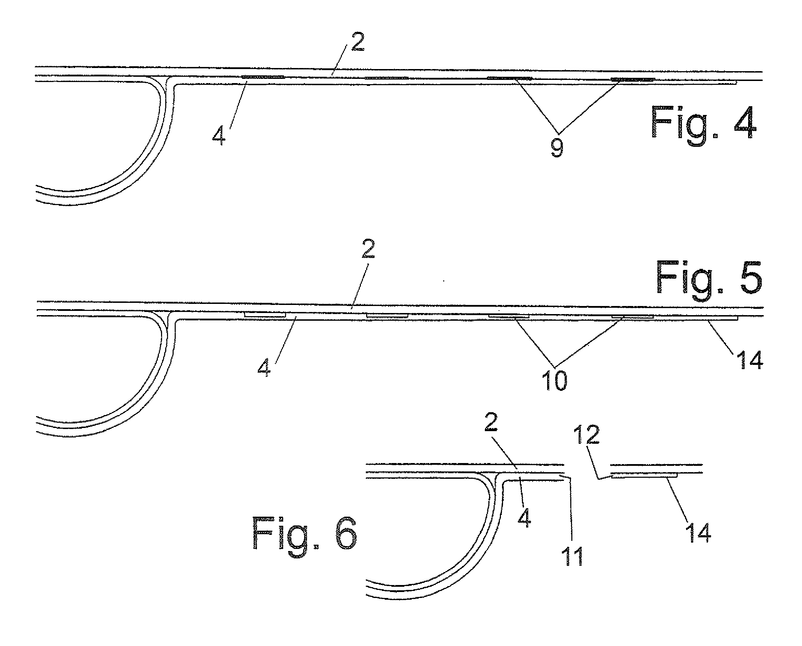

Figur 4 zeigt einen vergrößerten Teilschnitt von Figur 3, in dem alternativ oder zusätzlich zu den Metalleinschlüssen im Klebstoff abschnittsweise Metallstreifen 9 oder eine Wärmeleitpaste 9 zwischen Absorberblech und Wärmeleitblech angeordnet sind. Hierdurch wird ebenfalls der Wärmeübergang verbessert.

Als weitere Alternative kann das Wärmeleitblech 4, wie in Figur 5 dargestellt, Kammern 10 aufweisen, die sich in Längsrichtung erstrecken und zur Aufnahme des Klebstoffs dienen. Diese Kammern werden vorzugsweise in der Vorproduktion eingeprägt. Dabei können die Anzahl und die Lage der Kammern variieren, ebenso wie die Breite und die Tiefe der Kammern. Zwischen den Kammern besteht ein direkter Kontakt zwischen Absorberblech 2 und Wärmeleitblech 4.

Figur 6 zeigt in einer versinnbildlichenden Ansicht die Verbindung von Absorberblech und Wärmeleitblech 4. Verdeutlicht wird hierbei, dass das Wärmeleitblech 4 sich zu seinen seitlichen Enden 14 hin verjüngt. So ist deutlich zu erkennen, dass die Blechstärke 11 in Rohrnähe deutlich dicker ist als die Blechstärke 12 zu den seitlichen Enden 14 des Wärmeleitbleches. Durch diese konische Ausbildung wird der Wärmefluss zusätzlich verbessert bei gleichzeitiger Materialeinsparung. Das Wärmeleitblech wird ebenso wie zuvor beschrieben in einem vorherigen Arbeitsprozess gewalzt (die Rinne 13, die Kammern 10 und die konisch zulaufenden Enden 14).

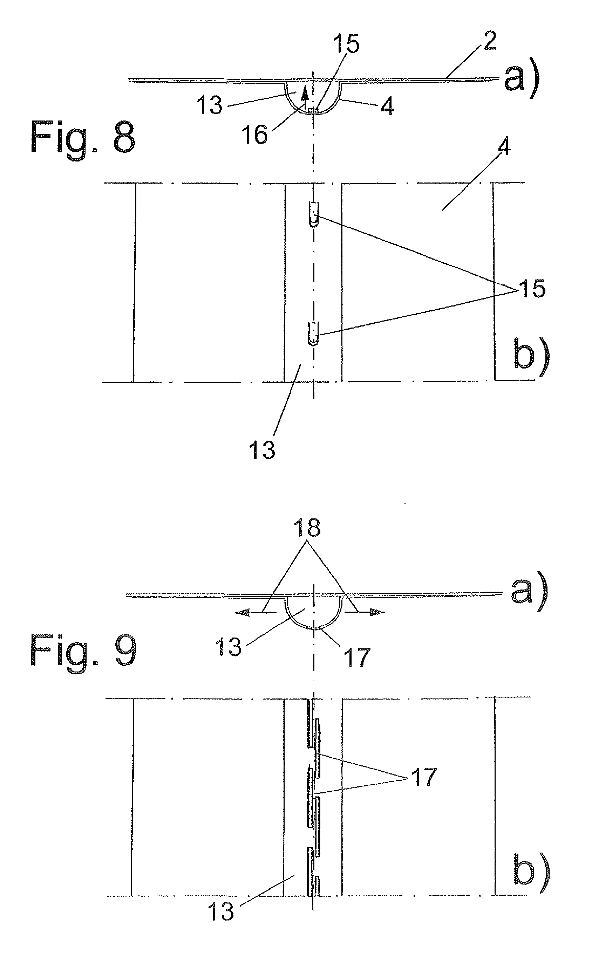

Figur 8 zeigt gestanzte Laschen 15 die in die Rinne 13 des Wärmeleitbleches 4 ragen und das Rohr (hier nicht dargestellt) unter das Absorberblech 2 drücken. Der Pfeil 16 zeigt die "Federrichtung" der Laschen.

Als weitere Option zeigt Figur 9 gestanzte Ausnehmungen 17 in der Rinne 13 des Wärmeleitbleches 4. Durch die versetzte Anordnung der Ausnehmungen 17 kann sich die Rinne besser dehnen (durch Pfeile 18 dargestellt) bzw. zusammenziehen, um unterschiedliches Ausdehnungsverhalten von Kupferrohr und Aluminiumblech auszugleichen. Dadurch umschließen sich die Bauteile wärmeleittechnisch immer optimal. Sie liegen immer aneinander. In Längsrichtung kann das Kupferrohr aber trotzdem "gleiten" (sich ausdehnen), sodass an der Absorberoberfläche keine Verwerfungen zu sehen sind.

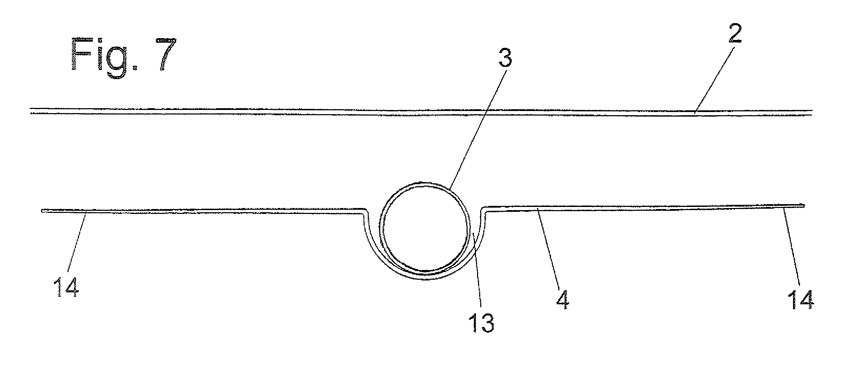

Anhand von Figur 7 können noch einmal die einzelnen Verfahrensschritte zur Herstellung des erfindungsgemäßen Absorbers erläutert werden.

Zunächst werden die Wärmeleitbleche gefertigt, die aus Blechzuschnitten gefertigt werden.

Aus den Blechzuschnitten werden nunmehr vorab - d.h. vor der Verbindung mit den weiteren Elementen des Absorbers - oder bei der Verbindung mit den weiteren Elementen des Absorbers das bzw. die eigentlichen Wärmeleitbleche gebildet.

Die Blechzuschnitte als Ausgangswerkstück werden dabei vorzugsweise streifenförmig gewalzt. Sie können ferner mit einer mit der Rinne 13, evtl. mit Kammern und ggf. auch mit konischen Enden versehen sein.

Die Wärmeleitbleche können aber auch nur als Flachstreifen abgelängt werden und erst im eigentlichen Prägevorgang mit dem Rohr und dem Absorberblech in Form gebracht werden.

Die Enden können selbstverständlich auch winklig abgestellt als Luftleitbleche ausgeführt werden, was aus dem Stand der Technik bekannt ist.

Zentral im Wärmeleitblech 4 angeordnet befindet sich die Rinne 13, die bogenförmig bzw. halbkreisförmig ausgeführt ist und deren Durchmesser deutlich größer ist als der Durchmesser des Rohres 3.

Sodann werden die seitlichen Arme des Wärmeleitblechs 4 auf ganzer Breite oder teilweise mit einem Klebstoff belegt.

Das vorzugsweise als Mäander gebogene Rohr 3 wird in die Rinne 13 des Wärmeleitbleches eingelegt, was aufgrund der großen seitlichen Toleranzen die Fertigung vereinfacht.

Nachfolgend werden das vorgeformte Wärmeleitblech, das wenigstens eine Rohr 3 und das Absorberblech 2 in dieser Reihenfolge geschichtet aufeinander gelegt, wobei das Absorberblech auf den Rohren aufliegt, also noch nicht mit der Klebemasse auf dem Wärmeleitblech 4 in Berührung kommt.

Ein Verformen des Rohres 3 und ein Verkleben finden im abschließenden Pressvorgang statt. Hierbei wird das Rohr 3 dergestalt verformt, dass sich zum Absorberblech 2 hin eine ebene Kontaktfläche bildet und dass die Rinne 13 des Wärmeleitbleches komplett ausgefüllt wird.

Die Rohrenden weisen vorzugsweise weiterhin einen runden, nicht abgeflachten Querschnitt auf, um übliche Anschlüsse montieren zu können.

### Bezugsziffern:

- 1: Absorber
- 2: Absorberblech
- 3: Rohr
- 4: Wärmeleitblech
- 5: Rohrende
- 6: Rohrende
- 7: Oberfläche
- 8: Fläche
- 9: Metallstreifen
- 10: Kammern

- 11: Blechstärke
- 12: Blechstärke
- 13: Rinne
- 14: Blechende

## Patentansprüche

1. Absorber (1), der ein zumindest abschnittsweise ebenes bzw. eine ebene Fläche (8b) aufweisendes Absorberblech (2) aufweist, an dem mit wenigstens einem Wärmeleitblech (4) wenigstens ein von einem Wärmeträgermedium zur Wärmemitnahme durchströmbares, vorzugsweise metallisches Rohr (3) angeordnet ist, welches eine jedenfalls abschnittsweise ebene Fläche (8a) aufweist, die an der ebenen Fläche (8b) des Absorberblechs anliegt.

2. Absorber nach Anspruch 1, **dadurch gekennzeichnet, dass** das wenigstens eine Wärmeleitblech (4) und das wenigstens ein Absorberblech (2) mittels einer Klebeverbindung mit einem Klebstoff miteinander verbunden sind, wobei vorzugsweise zwischen dem Absorberblech und dem wenigstens einen Rohr kein Klebstoff angeordnet ist.

3. Absorber nach Anspruch 2, **dadurch gekennzeichnet, dass** dem Klebstoff gut wärmeleitende Stoffe, insbesondere Metallsplitter oder -fasern beigemengt sind und/oder dass abschnittsweise Metallstreifen (9) oder eine Wärmeleitpaste zwischen dem wenigstens einen Wärmeleitblech (4) und dem Absorberblech (2) angeordnet ist/sind.

4. Absorber nach einem der vorstehenden Ansprüche, **dadurch gekennzeichnet, dass** das wenigstens eine Wärmeleitblech (4) Abschnitte direkten Kontaktes zum Absorberblech aufweist und Abschnitte, in denen es mit dem Absorberblech (2) verklebt ist, wobei die klebefreien Abschnitte vorzugsweise mit den Klebeabschnitten wechseln.

5. Absorber nach einem der vorstehenden Ansprüche, **dadurch gekennzeichnet, dass** das oder die Wärmeleitbleche (4) zu einem oder beiden Enden hin konisch ausgebildet sind.

6. Absorber nach einem der vorstehenden Ansprüche, **dadurch gekennzeichnet, dass** das Absorberblech (2) und das Wärmeleitblech (4) aus einem Metall, insbesondere aus einem Aluminiumwerkstoff oder einem Kupferwerkstoff, bestehen.

7. Absorber nach einem der vorstehenden Ansprüche, **dadurch gekennzeichnet, dass**das
a. wenigstens eine Rohr (3) die Querschnittsform eines in einem Teilbereich seines Umfangs abgeflachten Kreises aufweist, wobei der abgeflachte Bereich die ebene Fläche ausbildet, welche an dem Absorberblech anliegt und wobei die Wärmeleitbleche formschlüssig den einer Kreisform folgenden übrigen Außenumfang des wenigstens einen Rohres (3) einfassen, wobei sich die ebene Fläche (a) des Rohres vorzugsweise über mehr als 1/3 des Rohrdurchmessers erstreckt oder
b. das wenigstens eine Rohr (3) die Querschnittsform eines in einem Teilbereich seines Umfangs abgeflachten Ovals aufweist, wobei der abgeflachte Bereich die ebene Fläche ausbildet, welche an dem Absorberblech anliegt und wobei die Wärmeleitbleche formschlüssig den einer Ovalform folgenden übrigen Außenumfang des wenigstens einen Rohres (3) einfassen, wobei sich die ebene Fläche (a) des Rohres vorzugsweise über mehr als 1/3 des kleineren Rohrdurchmessers des Ovals erstreckt.

8. Absorber nach einem der vorstehenden Ansprüche, **dadurch gekennzeichnet, dass** das wenigstens eine Rohr (3) eine Mäanderform mit geraden Rohrabschnitten und umgebogenen Rohrabschnitten aufweist und/oder dass mehrere der Rohre (3) eine Harfenform ausbilden und/oder dass die Wärmeleitbleche (4) jeweils streifenförmig ausgelegt sind, wobei jedem geraden Rohrabschnitt des Mäanders in Längsrichtung jeweils ein streifenförmiges Wärmeleitblech zugeordnet ist und wobei die jeweils um 180° umgebogenen Rohrabschnitte (6) nicht von den Wärmeleitblechen (4) abgedeckt sind.

9. Absorber nach einem der vorstehenden Ansprüche, **dadurch gekennzeichnet, dass** das wenigstens eine Wärmeleitblech (4) gewalzte Kammern zur Aufnahme von Klebstoffen, von Wärmeleitpaste oder von Metallfasern aufweist.

10. Absorber nach einem der vorstehenden Ansprüche, **dadurch gekennzeichnet, dass** das Rohr (3) eine Wandstärke von 0,2 mm bis 0,5 mm, vorzugsweise 0,3 mm, aufweist und/oder dass das wenigstens eine Wärmeleitblech eine Wandstärke von 0,3 mm bis 0,7 mm vorzugsweise 0,5 mm aufweist.

11. Absorber nach einem der vorstehenden Ansprüche, **dadurch gekennzeichnet, dass** das wenigstens eine Wärmeleitblech wenigstens eine Rinne (13) aufweist, in welcher das Rohr (3) angeordnet ist, wobei vorzugsweise gestanzte Laschen (15) in die Rinne (13) des Wärmeleitbleches (4) ragen, welche das wenigstens eine Rohr unter das Absorberblech (2) drücken und/oder wobei vorzugsweise gestanzte Ausnehmungen (17) in der Rinne (13) des Wärmeleitbleches (4) ausgebildet sind.

12. Verfahren zu Herstellung eines Absorbers nach einem der vorstehenden Ansprüche, **dadurch gekennzeichnet, dass** das wenigstens eine Rohr (3) und das oder die Wärmeleitbleche aufeinander bzw. zusammengelegt werden und dass dann an dieser Anordnung aus dem wenigstens einen Rohr und dem wenigstens einen Wärmeleitblech (4) die abschnittsweise ebene Fläche (8a) des metallischen Rohres in einem umformenden, nicht spanabhebenden Arbeitsgang geformt wird, wobei sich das Rohr (3) bei dem umformenden Arbeitsgang ferner vorzugsweise in direkter Anlage zu dem Absorberblech (2) befindet.

13. Verfahren nach einem der vorstehenden Ansprüche, **dadurch gekennzeichnet, dass** das nicht spanabhebende Umformverfahren ein Pressverfahren ist, wobei zumindest das wenigstens eine Rohr (3), das wenigstens eine Wärmeleitblech (4) und vorzugsweise auch das Absorberblech (2) gemeinsam in ein Presswerkzeug eingelegt sind oder dass das nicht spanabhebende Umformverfahren ein Drückrollverfahren ist.

14. Verfahren nach einem der vorstehenden Ansprüche , **dadurch gekennzeichnet, dass**
a) in dem wenigstens einen Wärmeleitblech (4) zunächst wenigstens eine Rinne (13) ausgebildet wird,
b) in diese Rinne (13) sodann das Rohr (3) eingelegt wird und
c) die Anordnung aus Schritt b) mit dem Absorberblech (1) abgedeckt wird und
d) die Anordnung aus Schritt c) sodann dem Umformverfahren aus Anspruch 22 unterzogen wird, wobei die Rinne (13) einen größeren Durchmesser aufweist als das in sie eingelegte Rohr (3).

15. Verfahren nach einem der vorstehenden Ansprüche , **dadurch gekennzeichnet, dass** zunächst streifenförmige Blechstücke zur Ausbildung der Wärmeleitbleche vorzugsweise aus einem Coil abgelängt werden und dass in diese Blechstücke die Rinne (13) eingeprägt wird, deren Durchmesser größer ist als der Durchmesser des Ausgangsrohres.

16. Verfahren nach einem der vorstehenden Ansprüche , **dadurch gekennzeichnet, dass**
e) die abgelängten und vorzugsweise bereits mit der Rinne versehenen Wärmeleitbleche (4) mit dem erfindungsgemäße Klebstoff eingerollt bzw. bestrichen werden,
f) die Wärmeleitbleche (4) in eine Werkzeugform einer Presse eingelegt werden,
g) sodann das gebogene Kupferrohr (13) in die Kanäle der Wärmeleitbleche eingelegt wird bzw. werden und
h) das Absorberblech (2) auf die Rohre aufgelegt wird, und dass
i) im Folgenden mit einem planebenen Stempel das Absorberblech (4) auf die Rohre (3) gepresst wird, so dass diese sich in den Rinnen (13) der Wärmeleitbleche (4) bei dem Umformen ausdehnen.

17. Verfahren nach einen der vorstehenden Ansprüche, **dadurch gekennzeichnet, dass** die Rinnen (13) der Wärmeleitbleche und der Rohrdurchmesser des Rohres (3) dergestalt aufeinander abgestimmt werden, dass die Rohre den letztlich verbleibenden Zwischenraum zwischen dem Absorberblech (2) und dem Wärmeleitblech nach dem Umformen annähernd vollumfänglich ausfüllen.
